# EUROPÄISCHE PATENTSCHRIFT

(11) **EP 2 675 416 B1**
(45) Veröffentlichungstag und Bekanntmachung des Hinweises auf die Patenterteilung: **28.01.2015**
(21) Anmeldenummer: 12700981.9
(22) Anmeldetag: 24.01.2012
(51) Int. Cl.: A61G 7/08, B62B 5/00, A61G 5/04, B60K 1/00, B60K 1/02

(54) **ZUSATZROLLE**
AUXILIARY ROLLER
ROULETTE AUXILIAIRE

(30) Priorität: 18.02.2011 DE 102011000817
(43) Veröffentlichungstag der Anmeldung: 25.12.2013
(73) Patentinhaber: Tente GmbH & Co. KG, 42929 Wermelskirchen (DE)
(72) Erfinder: BLOCK, Wolfgang, 42929 Wermelskirchen (DE); HOFRICHTER, Günther, 42553 Velbert (DE)
(74) Vertreter: Müller, Enno
(86) Internationale Anmeldenummer: PCT/EP2012/051014
(87) Internationale Veröffentlichungsnummer: WO 2012/110283

(56) Entgegenhaltungen:
- EP-A2- 1 911 429
- WO-A1-2007/093549
- JP-A- 2006 000 328
- US-A- 1 172 456
- US-A- 3 263 983
- US-A1- 2003 102 172
- US-A1- 2003 192 725
- US-B1- 7 419 019

## Beschreibung

Die Erfindung betrifft eine einen starren Rahmen aufweisende Zusatzrolle mit einem in dem Rahmen gelagerten antreibbaren, eine Achse aufweisenden Rad, wobei das Rad zusammen mit dem Rahmen relativ zu einem Chassis, an dem es anzubringen ist, durch Verschwenken anhebbar oder absenkbar ist, und eine an einem Ende drehbeweglich chassisfest angelenkte Druckfeder vorgesehen ist, um in der abgesenkten Stellung das Rad im Hinblick auf einen Bodenkontakt zu belasten.

Eine derartige Zusatzrolle ist beispielsweise aus der US 6,752,224 B2 bekannt. Bei der bekannten Zusatzrolle wirkt die Druckfeder über einen Hebel auf den Rahmen ein. Eine Schwenkbewegung der Druckfeder ist gegensinnig zu einer Schwenkbewegung des Rahmens. Der Hebel ist am Chassis gelagert. Insgesamt ist eine aufwendige Konstruktion gegeben.

Weiterhin ist zum Stand der Technik auf die WO 2007/093549 A1 zu verweisen. Der Offenbarungsgehalt letztgenannter Druckschrift wird hiermit vollinhaltlich in die Offenbarung vorliegender Anmeldung einbezogen, auch zum Zwecke Merkmale der genannten Druckschrift in Ansprüche vorliegender Anmeldung mit aufzunehmen. In dieser Druckschrift ist einerseits der Gegenstand insgesamt als Zusatzrolle, aber auch das Rad mit Zusatzrolle bezeichnet. Zur begrifflichen Unterscheidung, ohne dass damit eine sachliche Änderung verbunden ist, ist vorliegend zwischen der gesamten Baueinheit, welche die Zusatzrolle darstellt, und dem Rad unterschieden.

Aus der US 7419 019 ist eine Druckfeder an einer Zusatzrolle bekannt, die sich auf einem gesonderten Vorrichtungsteil, das nur zur Abstützung der Druckfeder vorgesehen ist, abstützt. Weiter ist es aus der EP 1911429 für eine Zusatzrol le bekannt, die Druckfeder einerseits an einem Drehteller der Zusatzrolle selbst anzulenken und andererseits an einem Klappteil, das hierfür vorgesehen ist.

Ausgehend von einem Stand der Technik gemäß der US 7419 019 beschäftigt sich die Erfindung mit der Aufgabenstellung, eine einfache und wirkungsvolle Anordnung der Druckfeder in Bezug auf das Rad beziehungsweise den das Rad aufnehmenden Rahmen anzugeben.

Diese Aufgabe ist beim Gegenstand des Anspruches 1 gelöst, wobei darauf abgestellt ist, dass eine in Richtung der Welle des Rades zwei Rahmenteile verbindende Querverbindung vorgesehen ist, dass die Druckfeder anderendig an der Querverbindung angelenkt ist und dass die Druckfeder mit dem Rahmen um den chassisfesten Drehpunkt bei einem Anheben beziehungsweise Absenken des Rades schwenkt. Die Anlenkung der Druckfeder ist unmittelbar in den Aufbau des Rahmens integriert. Eine mit dem Rahmen sich bewegende Querverbindung, zur Verbindung von zwei gegenüberliegenden Rahmenteilen, zwischen welchen bevorzugt die Zusatzrolle aufgenommen ist, schwenkt zusammen mit dem Rahmen und dem diesbezüglichen, auf sie einwirkenden Ende der Druckfeder. Eine Hebelumlenkung ist nicht erforderlich. Zudem wird der Rahmen unmittelbar durch die Druckfeder beaufschlagt. Die gewählte Anordnung erbringt auch bei unterschiedlicher Absenkung des Rades, etwa im Falle einer Bodenwelle, eine praktisch gleiche Andruckkraft, mit der das Rad auf den Boden gedrückt wird.

Es ist bevorzugt, dass die Druckfeder das Rad in der angehobenen Stellung auch in diese angehobene Stellung drückt. Hierzu kann die Anlenkung der Druckfeder an dem Rahmen sich im angehobenen Zustand des Rades oberhalb der Anlenkung der Druckfeder an dem Chassis befinden. Es ist auch insofern keine Hebelübersetzung erforderlich. Durch die gegebenen Anlenkpunkte wird unmittelbar der gewünschte Druckzustand in der angehobenen Stellung erreicht. Hierfür kann es sinnvoll sein, dass an dem Chassis beziehungsweise dem Teil der Gesamtanordnung der Zusatzrolle, das an dem Chassis zu befestigen ist, eine vertikal nach unten zu dem Chassis beabstandende Auskragung vorgesehen ist, an welcher chassisseitig beziehungsweise chassisfest die Druckfeder angelenkt ist. So kann der gewünschte Druckzustand, ohne dass eine Anhebung des Rahmens über eine im Wesentlichen horizontale Ausrichtung hinaus und/oder über eine Verbindungsebene der Zusatzrolle beziehungsweise des Rahmens mit dem Chassis hinaus erforderlich ist, im angehobenen Zustand erreicht werden.

Die Druckfeder ist weiter bevorzugt von einer Führungsstange durchsetzt. Die Führungsstange ist entsprechend unmittelbar an dem Chassis beziehungsweise dem zugeordneten Teil der Gesamtkonstruktion der Zusatzrolle und an dem Rahmen, einwirkend bevorzugt auf die Querverbindung, angelenkt. Die Führungsstange verhindert ein Ausweichen der bevorzugt als Wendelfeder ausgebildeten Druckfeder. In weiterer Einzelheit ist auch bevorzugt, dass die Führungsstange teleskopierbar ist. Da die Druckfeder bevorzugt chassisseitig außerhalb einer Drehanordnung des Rahmens relativ zu dem Chassis befestigt ist, ergibt sich im Zuge des Verschwenkens eine Längenänderung zwischen dem Anlenkpunkt am Chassis und an dem Rahmen. Diese Längenänderung kann durch die genannte Teleskopierbarkeit aufgenommen werden.

Bevorzugt ist auch, dass die Druckfeder in einer Vertikalprojektion innerhalb des Rahmens, der das Rad aufnimmt, angeordnet ist. In einer Horizontalprojektion, also in einer Projektion in Richtung der Achse des Rades ist darüber hinaus bevorzugt, dass die Druckfeder zumindest teilweise innerhalb des Rahmens angeordnet ist. In einer hochgeschwenkten Stellung des Rahmens ist sie bevorzugt auch in der Horizontalprojektion in dem Rahmen aufgenommen. Es ist eine kompakte Baueinheit geschaffen, die ohne dass wesentliche Eingriffe an einem Chassis, an dem sie anzubringen ist, erforderlich sind, an unterschiedlichen Gegenständen angebracht werden kann.

Im Hinblick auf die einen starren Rahmen aufweisende Zusatzrolle, in der ein antreibbares Rad gelagert ist, wobei das Rad zusammen mit dem Rahmen relativ zu dem Chassis, an dem es anzubringen ist, durch Verschwenken anhebbar oder absenkbar ist, ist auch vorgesehen, dass an dem Rahmen ein nach außen vorstehender Betätigungshebel angelenkt ist, zur Verschwenkung des Rades in die angehobene Stellung ohne motorische Hilfe.

Dadurch, dass das Rad alternativ auch ohne motorische Hilfe anhebbar ist, kann in Ausnahmesituationen, etwa in einem Notfall, wenn es sich um eine beispielsweise an einem Krankenhausbett angebrachte Zusatzrolle handelt, bei welcher sich das Rad in der abgesenkten Stellung befindet, dieses sehr rasch und mit alleiniger Körperkraft außer Wirkung gebracht werden. Der Hebel kann so ausgelegt sein, dass eine ausreichende Hebelübersetzung im Hinblick auf die erforderlichen Kräfte gegeben ist.

Es ist bevorzugt, dass der Hebel sowohl relativ zu dem Rahmen sowie relativ zu einer Montageplatte oder dem Chassis, an dem das Rad beziehungsweise der das Rad lagernde Rahmen anzubringen ist, verschwenkbar ist. Hiermit kann eine günstige Ausgangsstellung des Hebels erreicht werden. Der Hebel kann in Bezug auf die Verschwenkbarkeit auch relativ zu dem Rahmen mittels einer Feder in eine Vorzugsstellung gedrückt sein.

Insbesondere ist bevorzugt, dass der Hebel in seine die abgesenkte Stellung des Rades ermöglichende Stellung vorgespannt ist.

Darüber hinaus ist bevorzugt, dass der Hebel das Anheben des Rades in die nicht aktivierte, also nicht mit einem Boden in Kontakt befindliche Stellung nur soweit erreichen lässt, dass kein Kontakt des Rades mit dem Boden mehr gegeben ist, andererseits aber auch nicht die üblicherweise motorisch erreichbare angehobene Stellung eingenommen ist.

Darüber hinaus ist bevorzugt, dass die durch den Hebel erreichbare angehobene Stellung verrastbar ist. Ein nochmaliges Absenken kann dann so lange nicht erfolgen, wie nicht diese Verrastung durch besondere Maßnahmen gelöst ist.

Insbesondere ist aber auch bevorzugt, dass die Verrastung sich durch eine einfache übliche motorische Betätigung lösen lässt. Nämlich wenn ausgehend von der durch den Hebeleinsatz erreichten angehobenen Stellung eine übliche motorische Anhebung des Rades ausgelöst wird, so dass eine den Hebel aufnehmende Rast relativ zu dem Hebel soweit bewegt wird, dass der Hebel zu Folge seiner Federvorspannung in seine ursprüngliche Stellung, welche das Anheben und Absenken nicht hindert, zurückschwenkt.

Ein möglichst starker Fahrantrieb ist dadurch gegeben, dass zwei Elektromotoren zum Fahrantrieb des Rades vorgesehen sind und dass die Elektromotoren bezüglich des Rades gegenüberliegend angeordnet sind. Hierdurch ist einerseits ermöglicht, dass wahlweise ein oder zwei Elektromotoren antriebsmäßig auf das Rad einwirken können. Da oftmals derartige Räder mit einer Batterie oder einem Akkumulator betrieben werden, ist so eine stromsparende Betriebsweise ermöglicht. Dadurch, dass zwei Elektromotoren vorgesehen sind, die zudem gegenüberliegend bezüglich des Rades angeordnet sind, können beide Elektromotoren unmittelbar auf dieselbe Achse beziehungsweise Welle des Rades einwirken. Die gegenüberliegende Anordnung erbringt zudem eine günstige gewichtsmäßige Verteilung. Es kann aber auch vorgesehen sein, dass beide Elektromotoren ständig gemeinsam das Rad antreiben.

Weiter bevorzugt ist auch vorgesehen, dass einer oder beide Elektromotoren wahlweise vorwärts oder rückwärts drehend, zur Ermöglichung zweier entgegengesetzter Fahrtrichtungen des Gegenstandes, an dem das Rad angebracht ist, antreibbar sind.

Darüber hinaus ist auch bevorzugt vorgesehen, dass einer oder beide Elektromotoren als Generator antreibbar sind. Dies kann etwa zum Bremsen der Vorrichtung, an der die Zusatzrolle angebracht ist, benutzt werden. Etwa wenn bei in Betrieb befindlicher Zusatzrolle auf Anhalten oder Stoppen geschaltet wird. Es kann auch vorgesehen sein, dass das Zusatzrad nur die Umschaltung auf einen Generatorbetrieb abbremsbar ist. Auf eine mechanische, insbesondere reibschlüssig wirkende Bremse kann dann vollkommen verzichtet werden. Da der Gegenstand, an dem die Zusatzrolle angebracht ist, noch über weitere Rollen verfügt, von denen eine oder mehrere blockierbar sind, wird die Festsetzung eines solchen Gegenstandes über diese Rollen vorgenommen. Zumal das Rad der Zusatzrolle bei stehendem Gegenstand sich in der Regel in der angehobenen Stellung befindet.

Bevorzugt ist weiter in diesem Zusammenhang vorgesehen, dass dieser Generatorbetrieb nur über eine bestimmte, vorzugsweise nicht allzu lange gewählte, Zeitspanne anhält. Im Zuge der Abschaltung des Verfahr-Antriebes mittels des Rades ist weiter bevorzugt vorgesehen, dass dieses nach einer gewissen Zeit sich selbständig in die nicht aktive Stellung, also die Stellung ohne Bodenkontakt, anhebt. Dann ist mangels Einwirkung auf das Rad kein Generatorbetrieb mehr möglich und entsprechend auch nicht gegeben. Diese Zeitspanne kann beispielsweise zwischen 1 und 20 Sekunden gewählt sein, wobei hiermit in die Offenbarung auch alle Zwischenwerte, insbesondere in 1/10 Sekunden-Schritten, also beispielsweise 1,1 oder 19,9 etc. Sekunden, auch zur Einschränkung der gewählten Zeitspanne von oben und/oder unten, aber auch zur Offenbarung singulärer Werte in der genannten Spanne, einbezogen sind.

Nachstehend ist die Erfindung weiter anhand der beigefügten Zeichnung erläutert, die aber lediglich ein Ausführungsbeispiel darstellt. Hierbei zeigt:
- Fig. 1: eine perspektivische Ansicht der Zusatzrollen-Baueinheit von schräg oben;

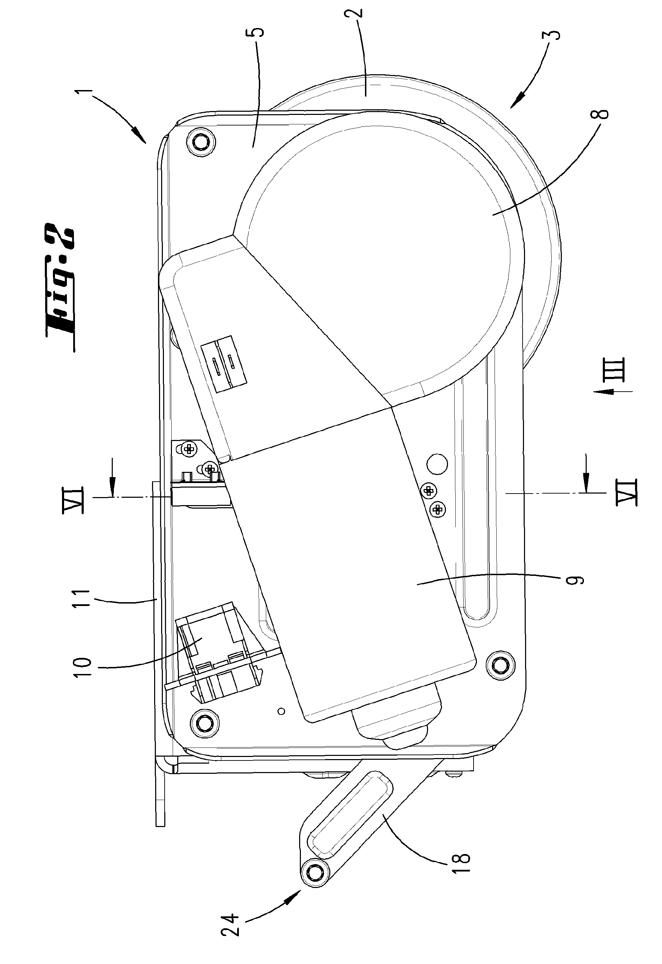

- Fig. 2: eine Seitenansicht des Gegenstandes gemäß Figur 1;
- Fig. 3: eine Unteransicht des Gegenstandes gemäß Figur 1;
- Fig. 4: einen Querschnitt durch den Gegenstand gemäß Figur 1, geschnitten entlang der Linie IV - IV in Figur 3;
- Fig. 5: einen weiteren Querschnitt, geschnitten entlang der Linie V - V in Figur 3;

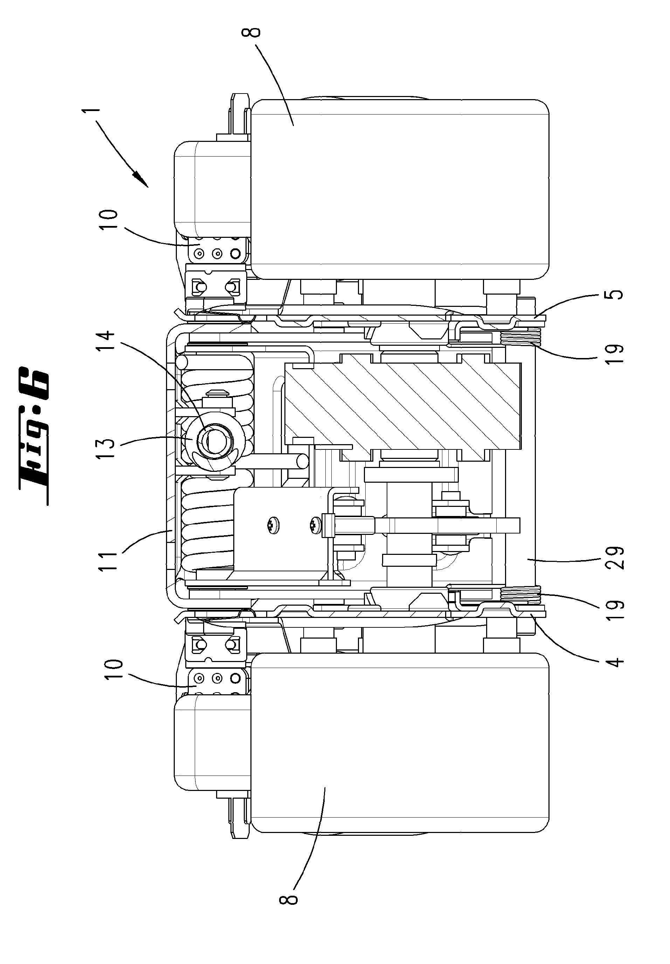

- Fig. 6: einen Querschnitt durch den Gegenstand gemäß Figur 2, geschnitten entlang der Linie VI - VI;
- Fig. 7: eine Darstellung gemäß Figur 4, jedoch im abgesenkten Zustand des Rades;
- Fig. 8: eine Darstellung gemäß Figur 5, jedoch im abgesenkten Zustand des Rades;

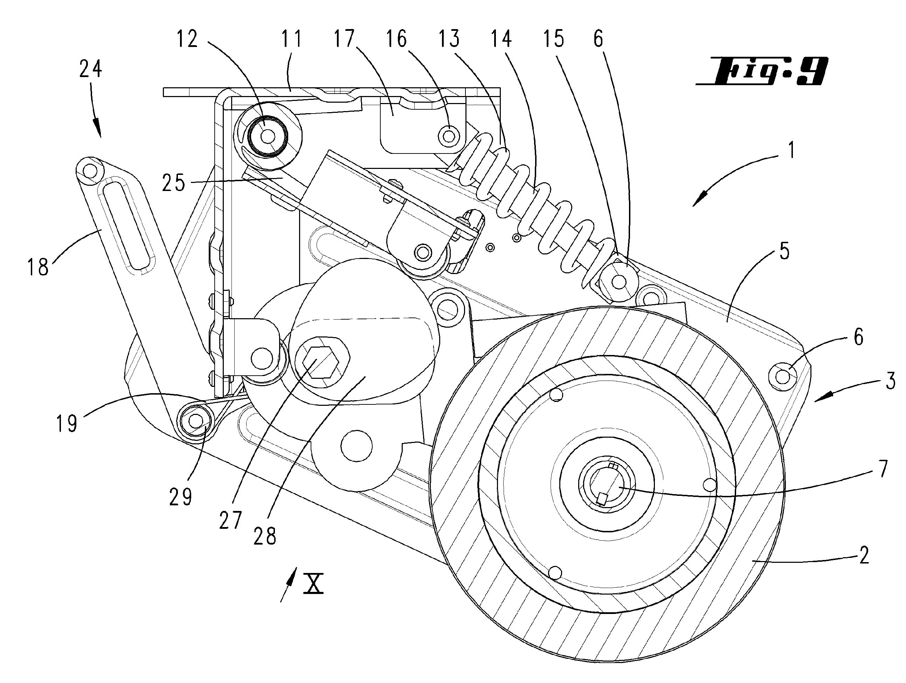

- Fig. 9: eine Darstellung gemäß Figur 7, jedoch in einem nochmals weiter abgesenkten Zustand;

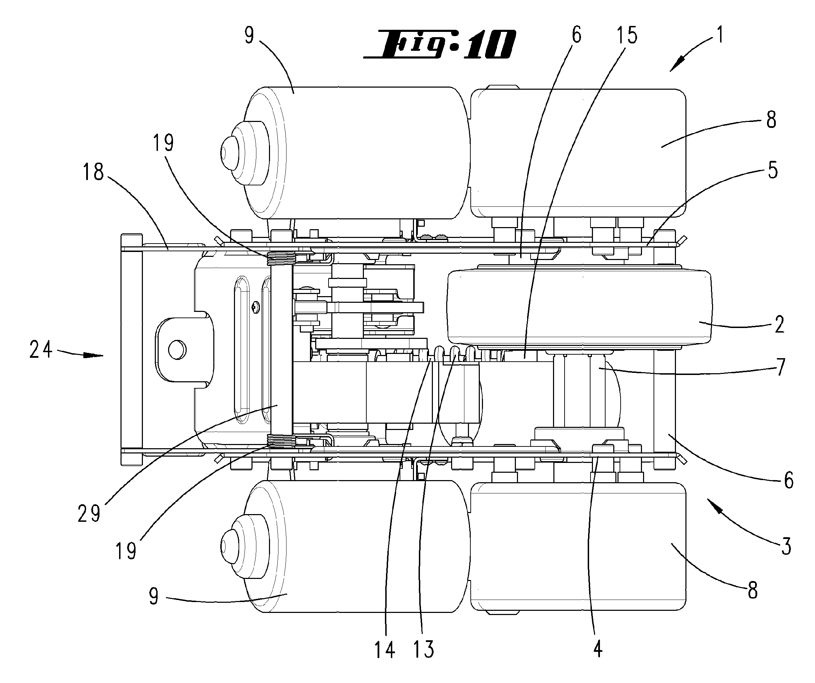

- Fig. 10: eine Darstellung in einer Ansicht in Richtung des Pfeils X in Figur 9;
- Fig. 11: eine Darstellung entsprechend Figur 8, jedoch zu Beginn eines Anhebens des Rades mittels des Hebel;
- Fig. 12: das Rad in vermittels des Hebels angehobener Stellung, in einer Darstellung gemäß Figur 7;
- Fig. 13: eine Darstellung gemäß Figur 12, jedoch in einem Schnitt entsprechend Fig. 11.

Dargestellt und beschrieben ist eine eine Zusatzrolle darstellende Baueinheit 1 mit einem Rad 2, welche Baueinheit 1 insgesamt an einem Chassis angebracht werden kann. Das Rad 2 ist in einem Rahmen 3 aufgenommen, der beim Ausführungsbeispiel aus zwei Rahmenteilen 4, 5 besteht, die miteinander zu einem einheitlich bewegbaren Rahmen 3, beispielsweise über eine Querverbindung 6, verbunden sind.

Eine solche Baueinheit 1 kann beispielsweise an einem Krankenhausbett angebracht sein. Sie kann aber auch an Transportvorrichtungen wie etwa einem Container oder einem Einkaufswagen oder dergleichen angebracht sein. Sie dient zum Verfahr-Antrieb eines solchen Gegenstandes.

Chassisseitig, also beispielsweise an dem Krankenhausbett, sind in der Regel noch ein Akkumulator und verschiedene Bedienungselemente vorgesehen, die geeignet elektrisch mit der Baueinheit 1 dann verbunden sind.

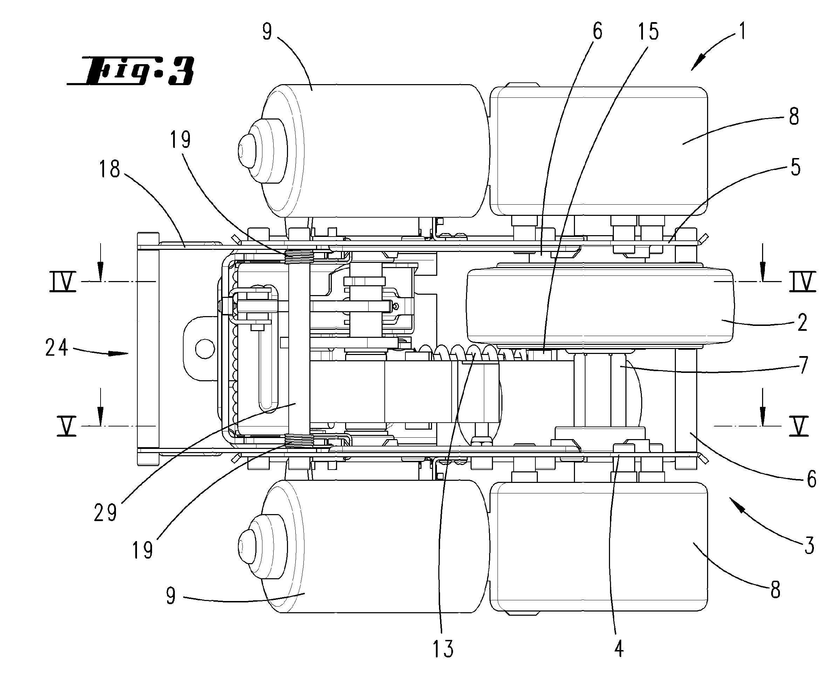

Die Rahmenteile 4, 5 erstrecken sich bevorzugt parallel zueinander. Das Rad 2 ist, bezüglich der Rahmenteile 4, 5, wie sich insbesondere etwa aus Figur 3 ergibt, außermittig, nämlich näher an dem Rahmenteil 5 angeordnet. Damit ist beispielsweise eine günstige Einschachtelung mit den weiter noch beschriebenen Aggregaten erreicht.

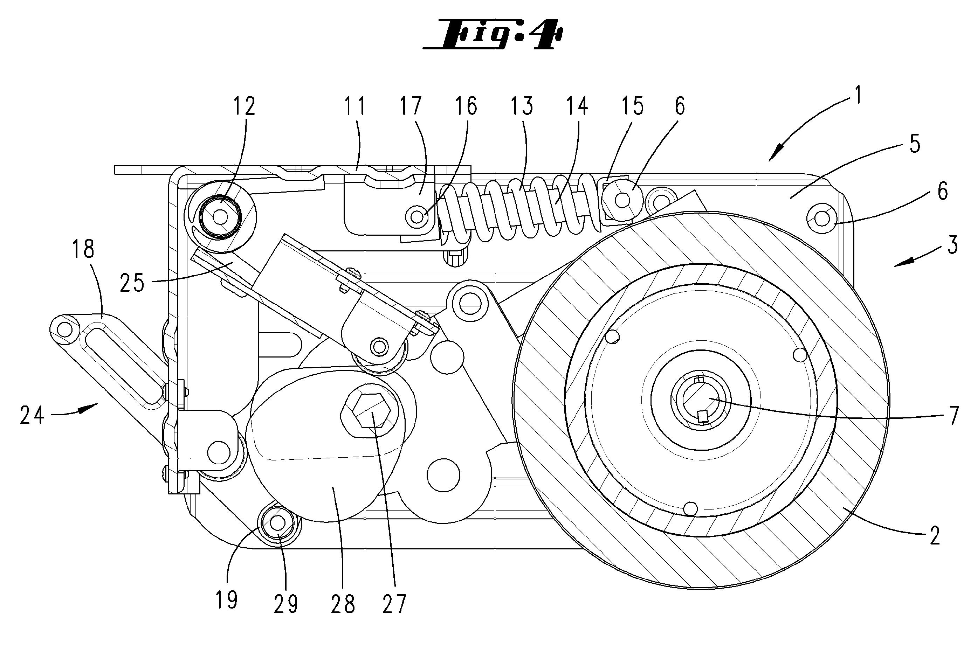

Die Laufrichtung des Rades 2 ist parallel zu den Rahmenteilen 4, 5. Die Welle 7, vergleiche auch Figur 4, des Rades 2 ist in den Rahmenteilen 4, 5 lagernd aufgenommen.

Beim Ausführungsbeispiel, im Hinblick auf die Version mit zwei Elektroantrieben, ragt die Welle 7 beidseitig über die Rahmenteile 4, 5 hinaus und ist dort jeweils mit einem Getriebe 8 und einem Elektromotor 9 verbunden. Das Getriebe 8 sowie der Elektromotor 9 sind jeweils von außen an dem Rahmenteil 4 beziehungsweise 5 befestigt. Das Getriebe 8 ist bevorzugt so ausgebildet, dass es nicht selbsthemmend ist und eine möglichst geringe innere Reibung aufweist. Hiermit kann beispielsweise auch eine Freilaufwirkung erreicht werden.

Zur Stromversorgung eines Elektromotors 9, wie aber auch zur Steuerung sind im Hinblick auf die bereits genannte geeignete elektrische Verbindung beispielsweise an dem Rahmen weiter Anschlussstecker 10 vorgesehen.

Zusätzlich zu den Rahmenteilen 4, 5 ist eine Montageplatte 11 vorgesehen. Beim Ausführungsbeispiel ist die Montageplatte 11 zwischen den Rahmenteilen 4, 5, deren der Unterseite eines beispielsweise Chassis eines Krankenhausbettes zugeordneten Bereichen, angeordnet. Der Rahmen 3 ist mit einer Achse 12 schwenkbeweglich mit der im Einbauzustand fest mit dem Chassis des betreffenden Gegenstandes verbundenen Montageplatte 11 verbunden. Die Achse 12 ist beim Ausführungsbeispiel mit den als Rahmenwänden ausgebildeten Rahmenteilen 4, 5 schraubverbunden. Die Rahmenteile 4, 5 sind bevorzugt nicht nur durch die Achse 12, sondern darüber hinaus auch durch die genannte Welle 7 des Rades 2 und Querverbindungen 6 verbunden.

Weiter ist eine Druckfeder 13 vorgesehen, die an einem Ende mit dem Chassis beziehungsweise der Montageplatte 11 beim Ausführungsgegenstand verbunden ist, siehe Figur 4, und anderendig mit dem Rahmen 3.

Die Druckfeder 13 ist auf einem insbesondere auch ein Ausknicken der Wendelfeder hindernden Teleskoprohr 14 angeordnet, wobei das Teleskoprohr 14, beim Ausführungsbeispiel über Bügelenden 15, einerseits mit einer Anlenkachse 16 der Montageplatte 11 und andererseits mit einer Querverbindung 6 zusammenwirkt.

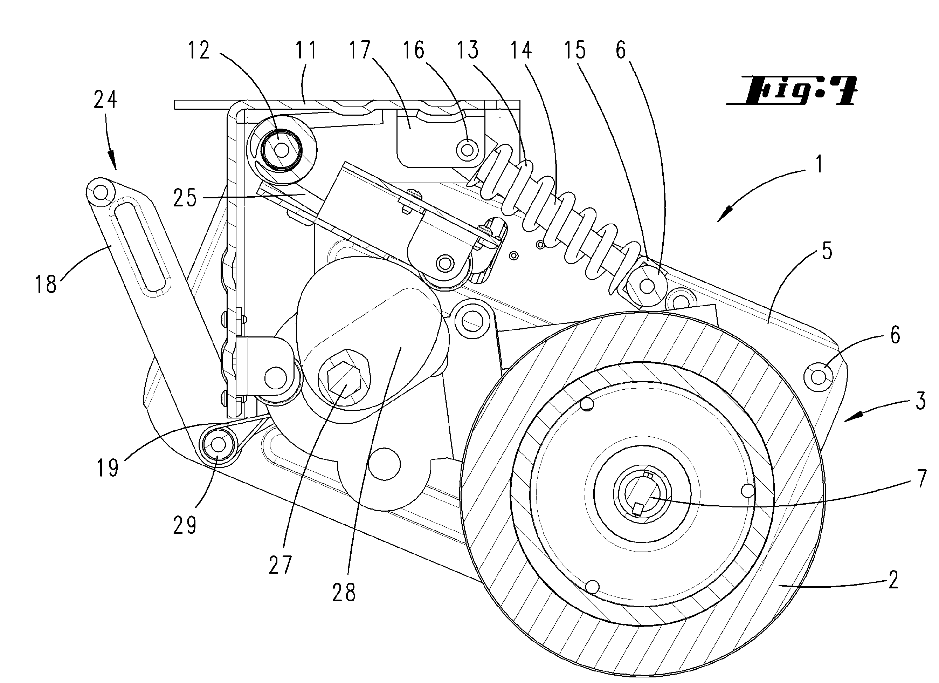

In der angehobenen Stellung gemäß Figur 4 wirkt die Druckfeder 13 derart, dass sie den Rahmen 3 in diese angehobene Stellung drückt. In der abgesenkten Stellung, vergleiche etwa Figur 7, erzeugt sie die hauptsächliche Kraft, welche das Rad 2 auf den Boden drückt. Zusätzlich ist aber weiter eine bevorzugt als Schenkelfeder ausgebildete Absenkfeder 25 vorgesehen. Die Absenkfeder 25 ist insbesondere auch dahingehend von Bedeutung, dass sie die Überwindung der in der Stellung gemäß Figur 4 in die angehobene Stellung wirkende Kraftkomponente der Druckfeder 13 im Zuge eines Absenkvorganges ermöglicht.

Bevorzugt übt die Druckfeder 13 eine etwa 3- bis 5-mal, weiter vorzugsweise etwa 4-mal höhere Kraft aus als die Absenkfeder 25.

Die Druckfeder 13 bewegt sich mit dem Rahmen 3 um den chassisfesten Drehpunkt, hier durch die Anlenkachse 16 gegeben, bei einem Anheben beziehungsweise Absenken des Rades 2.

Die Anlenkung der Druckfeder 13 an dem Rahmen 3, hier vermittels der Querverbindung 6, befindet sich ersichtlich in der angehobenen Stellung gemäß Figur 4 oberhalb der Anlenkung 16 an dem Chassis. Wenn auch der vertikale Abstand vergleichsweise gering ist. Das Abstandsmaß ist geringer als es einem Durchmesser der hier als Schraubenfeder ausgebildeten Druckfeder 13 entspricht.

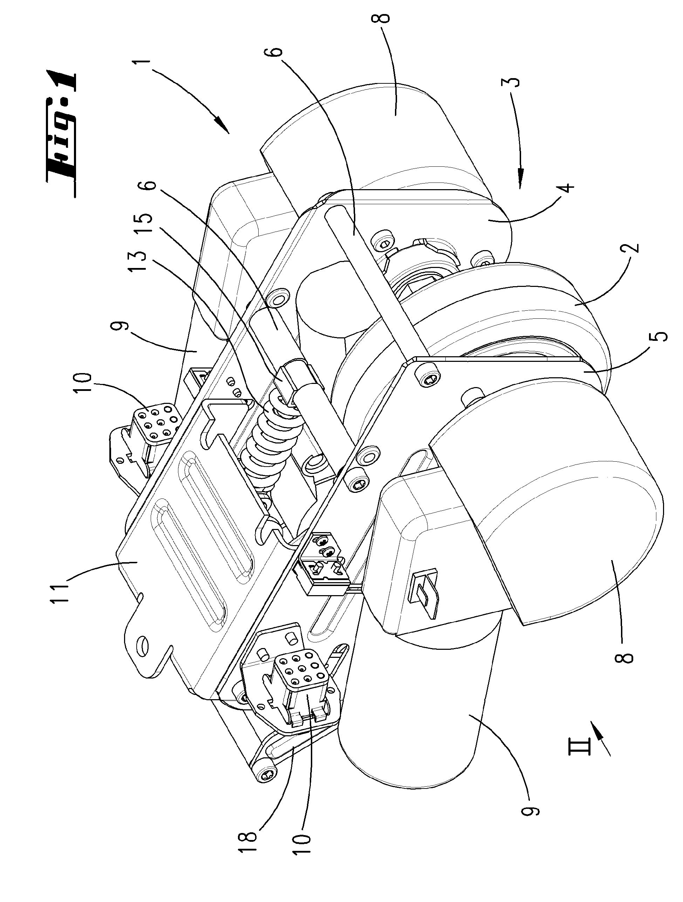

In einer Vertikalprojektion, wie sich etwa aus der Darstellung der Figur 1 ergibt, befindet sich die Druckfeder 13 zwischen den Rahmenteilen 4 und 5. Hierbei ist sie im angehobenen Zustand gemäß Figur 4 auch in einer Horizontalprojektion innerhalb der Rahmenteile 4 und 5 aufgenommen. Im abgesenkten Zustand, vergleiche etwa Figur 7, kann sie über einen Teil ihrer Länge aus dem Rahmen herausragen.

An der Montageplatte 11 ist eine nach unten ragende Anlenkausbildung 17 vorgesehen, welche die Anlenkachse 16 aufnimmt. So ist eine gewünschte, im angehobenen Zustand etwa gemäß Figur 4 gegenüber der Querverbindung 6 abgesenkte Stellung der Anlenkachse 16 erreicht.

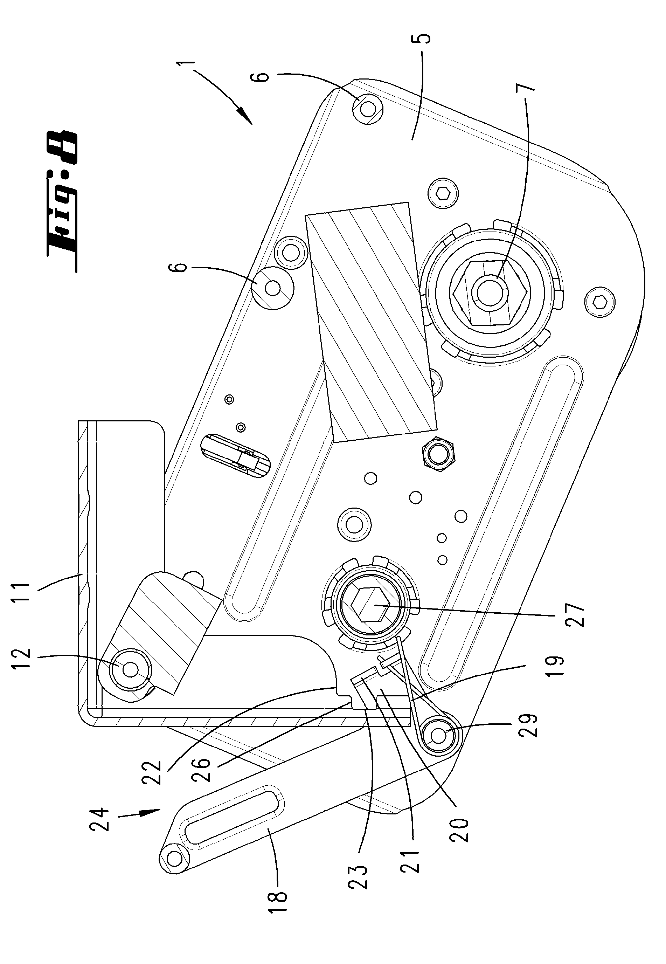

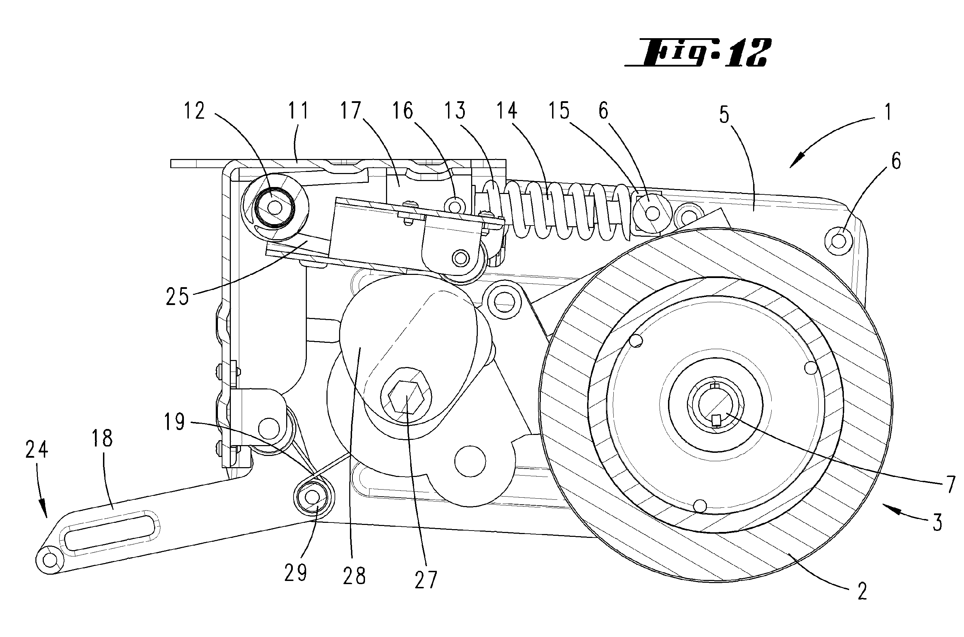

Weiter ist ein Betätigungshebel 18 vorgesehen, mit dem das Rad 2 zusammen mit dem Rahmen 3 aus einer abgesenkten Stellung gemäß Figur 7 beziehungsweise Figur 8 in eine jedenfalls teilweise angehobene Stellung gemäß Figur 12 allein durch beispielsweise Körperkraft versetzbar ist.

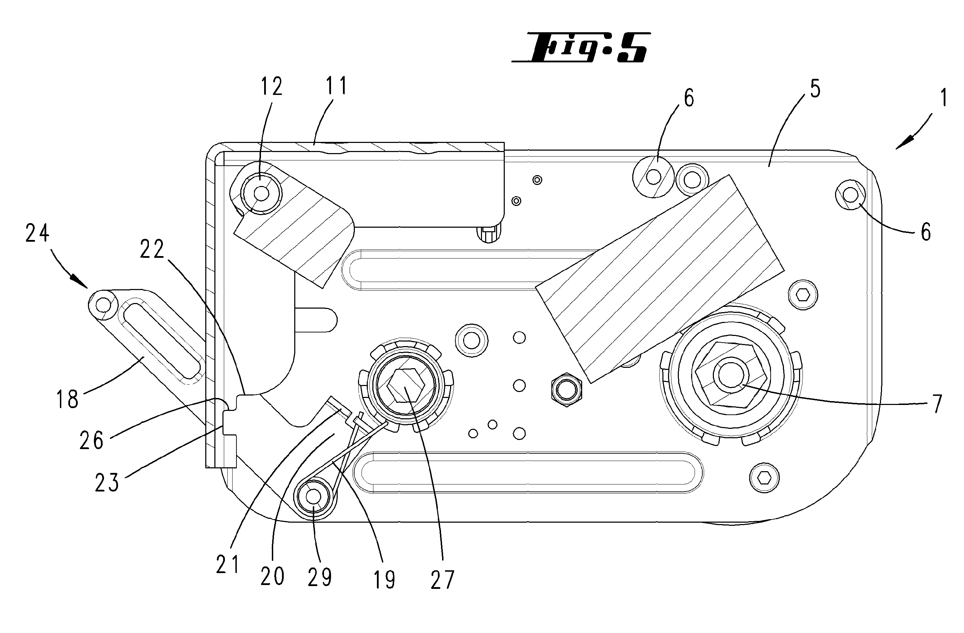

Der Hebel 18 ist einerseits über eine weitere Querverbindung 29, die, bezogen etwa auf die Darstellung in Figur 4, einem unteren Rand der Rahmenteile 4, 5 zugeordnet ist, drehbeweglich angeordnet. Hierbei ist weiter der Betätigungshebel 18 mittels einer Feder 19 in eine Stellung gemäß Figur 5 vorgespannt.

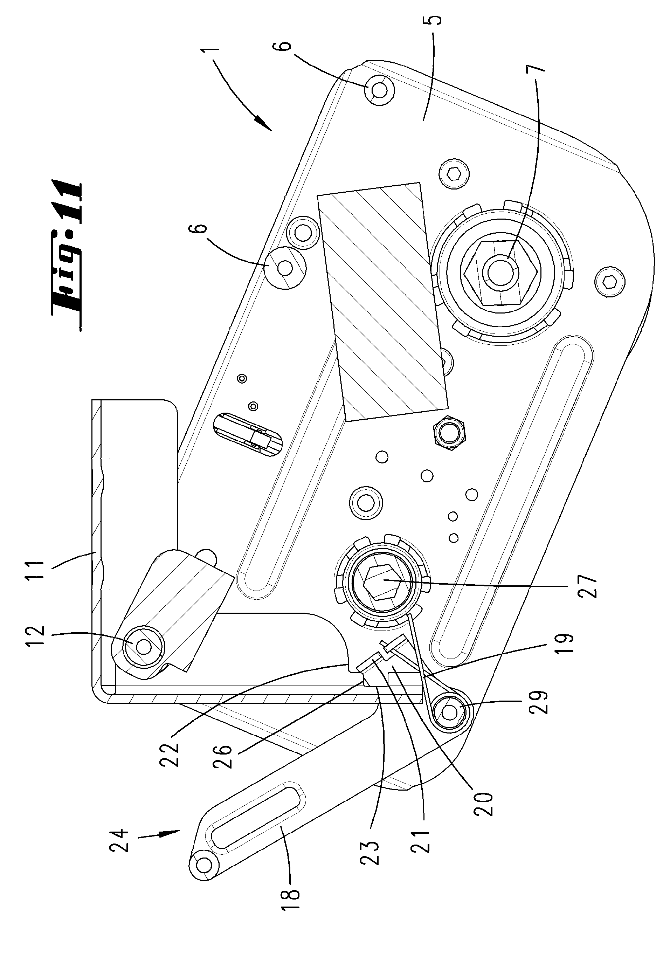

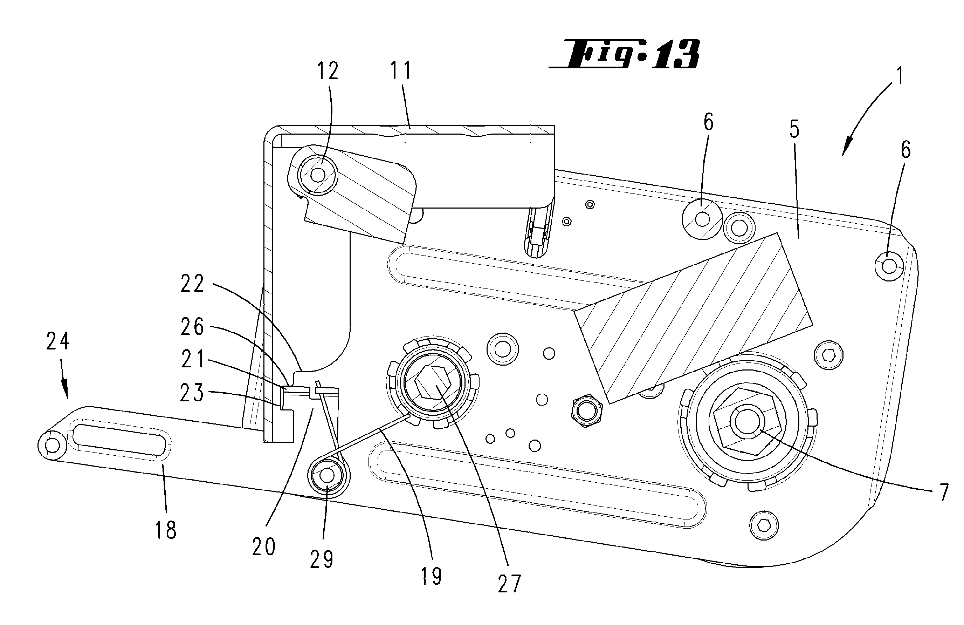

Der Betätigungshebel 18, er ist ersichtlich bevorzugt zweifach vorgesehen, erstreckt sich etwa parallel zu den Rahmenteilen 4, 5. Er weist eine Abwinklung 20 auf, die sich gleichfalls noch etwa parallel zu den Rahmenteilen 4, 5 erstreckt. Diese Abwinklung 20 weist darüber hinaus eine Rastausformung 21 auf, die im betätigten Zustand, siehe etwa Figur 11 beziehungsweise Figur 13, mit einer Rastaufnahme 22 beziehungsweise 23 zusammenwirkt, die an der Montageplatte 11 ausgebildet ist.

Die Montageplatte 11 erstreckt sich im Querschnitt, wie ersichtlich, winkelförmig. Die Rastausnehmungen 22, 23 sind an einem Vertikalabschnitt dieser winkelförmigen Montageplatte ausgebildet. Jedenfalls sind sie chassisfest.

Nach einer Kraftbeaufschlagung auf das freie Ende 24 der Betätigungshebel 18 ergibt sich eine Stellung beispielsweise gemäß Figur 13. Aufgrund der Anlenkung der Rahmenteile 4, 5 an der Achse 12 kollidiert die Abwinklung 21 mit der Stufenfläche 26 der Montageplatte 11, so dass eine Zurückbewegung in die abgesenkte Stellung aus der Stellung gemäß Figur 13 für das Rad 2 ohne weiteren Eingriff nicht möglich ist.

Zu Folge einer motorischen Betätigung der Welle 27 mit dem Exzenter 28 in üblicher Weise, vergleiche hierzu auch den Offenbarungsgehalt der eingangs genannten WO 2007/093549 A1, kann jedoch eine (weitere) Anhebung erfolgen, welche es dem Betätigungshebel 18 zu Folge der Wirkung der Feder 19 ermöglicht, in die Stellung gemäß Figur 5 zurückzuschwenken, wonach wieder eine übliche motorische Betätigung des Rades 2 ermöglicht ist.

### Bezugszeichenliste

| | | | |
|---|---|---|---|
| 1 | Baueinheit | 25 | Absenkfeder |
| 2 | Zusatzrolle | 26 | Stufenfläche |
| 3 | Rahmen | 27 | Welle |
| 4 | Rahmenteil | 28 | Exzenter |
| 5 | Rahmenteil | 29 | Querverbindung |
| 6 | Querverbindungen | | |
| 7 | Welle | | |
| 8 | Getriebe | | |
| 9 | Elektromotor | | |
| 10 | Anschlussstecker | | |
| 11 | Montageplatte | | |
| 12 | Achse | | |
| 13 | Druckfeder | | |
| 14 | Teleskoprohr | | |
| 15 | Bügelenden | | |
| 16 | Anlenkachse | | |
| 17 | Anlenkausbildung | | |
| 18 | Betätigungshebel | | |
| 19 | Feder | | |
| 20 | Abwinklung | | |
| 21 | Rastausformung | | |
| 22 | Rastaufnahme | | |
| 23 | Rastaufnahme | | |
| 24 | freies Ende | | |

## Patentansprüche

1. Einen starren Rahmen (3) aufweisende Zusatzrolle mit einer in dem Rahmen (3) gelagerten antreibbaren, eine Welle (7) aufweisenden Rad (2), wobei das Rad (2) zusammen mit dem Rahmen (3) relativ zu einem Chassis, an dem die Zusatzrolle anzubringen ist, durch Verschwenken anheb-oder absenkbar ist, und eine an einem Ende drehbeweglich an dem Chassis angelenkte Druckfeder (13) vorgesehen ist, um in der abgesenkten Stellung das Rad (2) im Hinblick auf einen Bodenkontakt zu belasten, **dadurch gekennzeichnet, dass** eine in Richtung einer Welle (7) des Rades (2) zwei Rahmenteile (4,5) verbindende Querverbindung (6) vorgesehen ist, dass die Druckfeder (13) anderendig an der Querverbindung (6) angelenkt ist und dass die Druckfeder (13) mit dem Rahmen (3) um einen chassisfesten Drehpunkt (12) bei einem Anheben beziehungsweise Absenken des Rades (2) schwenk.

2. Zusatzrolle nach Anspruch 1, **dadurch gekennzeichnet, dass** die Anlenkung der Druckfeder (13) an dem Rahmen (3) sich im angehobenen Zustand des Rades (2) oberhalb der Anlenkung des Rades (2) an dem Chassis befindet.

3. Zusatzrolle nach einem der vorhergehenden Ansprüche, **dadurch gekennzeichnet, dass** die Druckfeder (13) von einer Führungsstange (14) durchsetzt ist.

4. Zusatzrolle nach Anspruch 3, **dadurch gekennzeichnet, dass** die Führungsstange (14) teleskopierbar ist.

5. Zusatzrolle nach einem der vorhergehenden Ansprüche, **dadurch gekennzeichnet, dass** die Druckfeder (13) in einer Vertikalprojektion innerhalb des Rahmens (3) angeordnet ist.

6. Zusatzrolle nach einem der vorhergehenden Ansprüche, **dadurch gekennzeichnet, dass** an dem Rahmen (3) ein nach außen vorstehender Betätigungshebel (18) angelenkt ist, zur Verschwenkung des Rades (2) in die angehobene Stellung ohne motorische Hilfe.

7. Zusatzrolle nach Anspruch 6, **dadurch gekennzeichnet, dass** der Hebel (18) sowohl relativ zu dem Rahmen (3) sowie relativ zu einer Montageplatte (11) oder dem Chassis verschwenkbar ist.

8. Zusatzrolle nach Anspruch 6 oder 7, **dadurch gekennzeichnet, dass** der Hebel (18) in seine die abgesenkte Stellung des Rades (2) ermöglichende Stellung vorgespannt ist.

9. Zusatzrolle nach einem der vorhergehenden Ansprüche, **dadurch gekennzeichnet, dass** zwei Elektromotoren (9) zum Antrieb des Rades (2) vorgesehen sind und dass die Elektromotoren (9) bezüglich des Rades (2) gegenüberliegend angeordnet sind.

10. Zusatzrolle nach einem der vorhergehenden Ansprüche, **dadurch gekennzeichnet, dass** das Rad (2) durch mindestens einen Elektromotor (9) antreibbar ist, wobei der mindestens eine Elektromotor (9) als Generator schaltbar ist und/oder in zwei Richtungen antreibbar ist.

## Claims

1. Auxiliary roller having a rigid frame (3), with a drivable wheel (2) which is mounted in the frame (3) and which has a shaft (7), the wheel (2) together with the frame (3), by pivoting, being raisable or lowerable relative to a chassis to which the auxiliary roller is to be attached, and a compression spring (13) which is rotatably linked at one end to the chassis being provided in order to load the wheel (2) with regard to ground contact in the lowered position, **characterized in that** a transverse connection (6) connecting two frame parts (4, 5) in the direction of a shaft (7) of the wheel (2) is provided, that the compression spring (13) is linked at the other end to the transverse connection (6), and that the compression spring (13) together with the frame (3) pivots about a pivot point (12) which is fixed to the chassis, when the wheel (2) is raised and lowered.

2. Auxiliary roller according to Claim 1, **characterized in that** the linking point of the compression spring (13) to the frame (3) in the raised state of the wheel (2) is situated above the linking point of the wheel (2) to the chassis.

3. Auxiliary roller according to one of the preceding claims, **characterized in that** a guide rod (14) passes through the compression spring (13).

4. Auxiliary roller according to claim 3, **characterized in that** the guide rod (14) has a telescoping capability.

5. Auxiliary roller according to one of the preceding claims, **characterized in that** the compression spring (13) is situated in a vertical projection within the frame (3).

6. Auxiliary roller according to one of the preceding claims, **characterized in that** an outwardly protruding activating lever (18) is linked to the frame (3) for pivoting the wheel (2) into the raised position without motorized assistance.

7. Auxiliary roller according to Claim 6, **characterized in that** the lever (18) is pivotable relative to the frame (3) and also relative to a mounting plate (11) or to the chassis.

8. Auxiliary roller according to Claim 6 or 7, **characterized in that** the lever (18) is biased into its position which enables the lowered position of the wheel (2).

9. Auxiliary roller according to one of the preceding claims, **characterized in that** two electric motors (9) are provided for the drive of the wheel (2), and wherein the electric motors (9) are situated on opposite sides relative to the wheel (2).

10. Auxiliary roller according to one of the preceding claims, **characterized in that** the wheel (2) being drivable by at least one electric motor (9), whereby the at least one electric motor (9) is switchable as a generator, and/or is drivable in two directions.

## Revendications

1. Roulette supplémentaire, munie d'un cadre (3) rigide et comportant une roue (2) actionnable, logée dans le cadre (3) et munie d'un axe (7), ladite roue (2), conjointement avec le cadre (3), pouvant être relevée et abaissée par pivotement par rapport à un châssis sur lequel la roulette supplémentaire est destinée à être montée, et il est prévu un ressort de pression (13) articulé sur le châssis de manière à tourner au niveau d'une extrémité, afin de solliciter la roue (2) pour un contact au sol dans la position abaissée, **caractérisée en ce qu'**il est prévu une liaison transversale (6) reliant deux parties (4, 5) du cadre dans la direction d'un axe (7) de la roue (2), **en ce que** le ressort de pression (13), au niveau de l'autre extrémité, est articulé contre la liaison transversale (6) et **en ce que** le ressort de pression (13) pivote avec le cadre (3) autour d'un point de rotation (12) solidaire du châssis en cas de levage ou d'abaissement de la roue (2).

2. Roulette supplémentaire selon la revendication 1, **caractérisée en ce que** l'articulation du ressort de pression (13) contre le cadre (3) se situe, dans la position relevée de la roue (2), au-dessus de l'articulation de la roue (2) contre le châssis.

3. Roulette supplémentaire selon l'une quelconque des revendications précédentes, **caractérisée en ce que** le ressort de pression (13) est traversé par une tige de guidage (14).

4. Roulette supplémentaire selon la revendication 3, **caractérisée en ce que** la tige de guidage (14) est télescopique.

5. Roulette supplémentaire selon l'une quelconque des revendications précédentes, **caractérisée en ce que**, sur une projection verticale, le ressort de pression (13) est disposé à l'intérieur du cadre (3).

6. Roulette supplémentaire selon l'une quelconque des revendications précédentes, **caractérisée en ce qu'**un levier d'actionnement (18), en saillie vers l'extérieur, est articulé contre le cadre (3) afin de faire pivoter la roue (2) dans la position relevée sans l'aide d'un moteur.

7. Roulette supplémentaire selon la revendication 6, **caractérisée en ce que** le levier (18) est apte à pivoter tant par rapport au cadre (3) que par rapport à une plaque de montage (11) ou le châssis.

8. Roulette supplémentaire selon la revendication 6 ou 7, **caractérisée en ce que** le levier (18) est précontraint dans sa position permettant la position abaissée de la roue (2).

9. Roulette supplémentaire selon l'une quelconque des revendications précédentes, **caractérisée en ce qu'**il est prévu deux moteurs électriques (9) pour actionner la roue (2) et **en ce que** lesdits moteurs électriques (9) sont disposés en face de la roue (2).

10. Roulette supplémentaire selon l'une quelconque des revendications précédentes, **caractérisée en ce que** la roue (2) peut être actionnée par au moins un moteur électrique (9), ledit au moins un moteur électrique (9) pouvant être connecté sous forme de générateur et/ou pouvant être actionné dans deux directions.
